# EUROPEAN PATENT APPLICATION

(11) **EP 0 987 453 A1**
(43) Date of publication of application: **22.03.2000**
(21) Application number: 99118169.4
(22) Date of filing: 13.09.1999
(51) Int. Cl.: F16C 1/12, F16C 1/14, F16H 61/36

(54) **A flexible control cable, particularly for control of vehicle transmissions**

(30) Priority: 15.09.1998 IT TO980783
(71) Applicant: SILA HOLDING INDUSTRIALE S.r.l., 10121 Torino (IT)
(72) Inventor: Melis, Salvatore, 10093 Collegno (IT)
(74) Representative: Saconney, Piero

(57) **Abstract**

A flexible control cable, particularly for motor-vehicle transmissions, comprises an operating cable (5) which is slidable in a sheath (3) and which can adopt a rest position and at least one operative position relative to the sheath. The cable has a stressing device comprising a shaped element (27) associated with a tubular portion (15) which is connected to one end of the sheath (3) for the sliding of a corresponding end portion (17) of the operating cable (5), and a resilient counter member (32) fixed axially to the operating cable (5) for engaging the shaped element (27) with pressure and with a capability for relative sliding. The shaped element (27) includes at least one ramp-like portion (29a, 29b) which can be engaged by the counter member (32) when the operating cable (5) is in its operative position so that an axial stress is generated between the operating cable (5) and the sheath (3).

## Description

The present invention relates in general to flexible control cables, also known as "push-pull" cables, of the type comprising an operating cable slidable in a sheath.

In known flexible control cables used, for example, for transmitting the movement of a gear-shift lever to a gearbox of a motor vehicle, the play which is present between the operating cable and the sheath, and which is necessary to permit good relative sliding between the elements and easy operation of the members connected thereto, may give rise to high-frequency vibrations which may be transmitted to the passenger compartment and amplified, producing annoying noise, when the vehicle on which the control cable is fitted is in operation.

To prevent these vibrations arising, it would be possible, in principle, to reduce the play existing between the operating cable and its sheath with the use of tighter working tolerances for these elements. However, this solution seems unpromising since it involves greater production costs precisely because of the use of smaller construction tolerances, as a consequence of the related more sophisticated processes and checks, and has the disadvantage that greater resistance are inevitably created between these elements with the undesirable consequence that the operation of the control members connected to the flexible control cable are rendered more difficult.

Another possible solution to the aforementioned problem consists of the provision of a device which can keep the operating cable stressed relative to the sheath at least when the operating cable adopts an operative position relative to the sheath, thus reducing the play present between the cable and the sheath without the need to modify the typical construction tolerances of the two elements.

More specifically, the invention relates to a flexible control cable, particularly for motor-vehicle transmissions, comprising an operating cable which is slidable in a sheath and which can adopt a rest position and at least one operative position relative to the sheath, a tubular portion being connected to one end of the sheath for the sliding of a corresponding end portion of the operating cable.

The main object of the present invention is to propose a flexible control cable the components of which are not subject to play in their operative condition, so that vibration of their elements is prevented without a reduction in the working tolerances of these elements.

This object is achieved by virtue of the fact that the control cable has a stressing device comprising a shaped element associated with the tubular portion and a resilient counter member fixed axially to the operating cable for engaging the shaped element with pressure and with a capability for relative sliding, the shaped element including at least one ramp-like portion which can be engaged by the counter member when the operating cable is in its operative position, so that an axial stress is generated between the operating cable and the sheath.

By virtue of the invention, the flexible control cable according to the invention comprises a device for relative stressing of the operating cable and of the sheath, the device being particularly effective in use and of simple and relatively inexpensive construction.

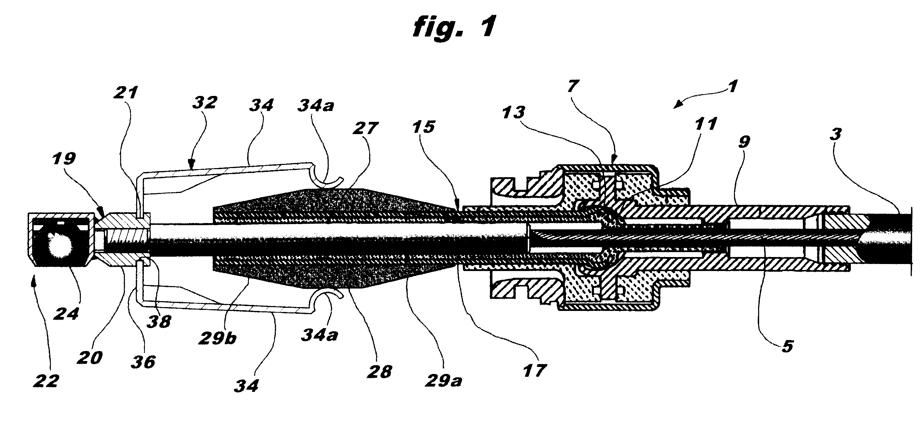

Further characteristics and advantages of the invention will become clearer from the following detailed description, provided purely by way of non-limiting example with reference to the appended drawings, in which: Figure 1 is a schematic, sectioned, side elevational view of a device according to the invention, and

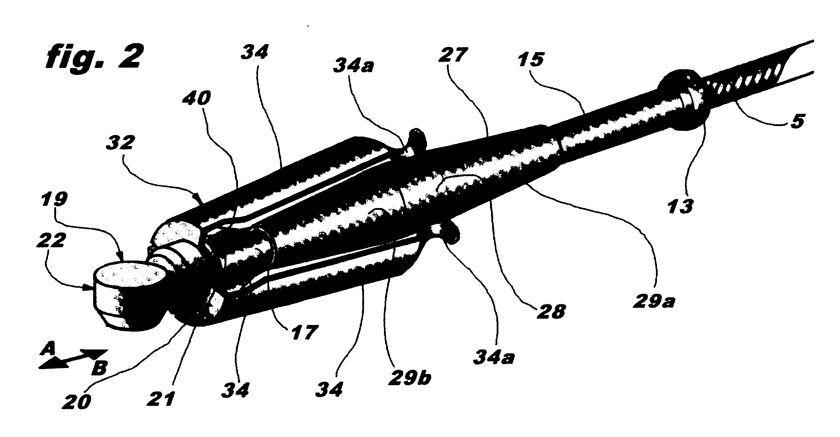

Figure 2 is a perspective view of some of the elements of the device shown in Figure 1.

With reference to the drawings, an end portion of a flexible control cable, also known as a "push-pull" cable, is generally indicated 1 and comprises, in known manner, a sheath 3 in which an operating cable 5, normally made of metal strands, is mounted for sliding.

In particular, the sheath 3 is fixed to a connection unit 7 for connection to a fixing bracket (not shown) anchored to the vehicle on which the control cable is fitted. The connection unit 7 includes, in particular, a tubular portion 9 defining an internal spherical seat 11 engaged by the spherical head 13 of an auxiliary tubular body 15 mounted so as to be pivotable relative to the unit 7 to permit limited transverse movements of the end of the operating cable 5.

The cable 5 has an end rod 17 mounted for sliding in the cavity inside the tubular body 15. The rod 17 in turn is fixed by means of a coupling device of known type, for example, of the male-and-female screw type, to a terminal portion 19 of the cable 15, enabling the cable to be connected to a pin of an operating member, for example a gear-shift lever of a motor vehicle (not shown). In particular, the portion 19 comprises a bush 20 for the anchorage of the opposite end of the rod 17 to the cable 5, a head 22 fixed to the bush defining an internal spherical seat 24 for the engagement of a correspondingly shaped head of the aforementioned pin.

On the outer surface of the portion of the tubular body 15 which projects from the unit 7, there is a shaped element 27 advantageously constituted by an added sleeve-like element which is formed, for example, by the moulding-on of plastics, preferably antifriction, material, and which defines at least one ramp-like or unstable-equilibrium portion for sliding engagement with pressure by a resilient counter member 32 connected axially to the terminal portion 19 of the cable 5.

In the specific embodiment illustrated, which is a transmission control cable in which the cable 5 is movable relative to the sheath 3 in order to adopt two opposed operative positions, the element 27 comprises two opposed ramp-like portions 29a, 29b, each corresponding to one operative position of the cable 5. In the case of the sleeve-like element 27, these ramp-like portions are conical.

Each ramp-like portion 29a, 29b advantageously extends for a distance at least equal to the travel of the cable 5 relative to the sheath 3, starting from the intermediate rest position. Moreover, the element 27 preferably comprises a flat, stable-equilibrium portion, which can be engaged by the resilient member 32 when the cable 5 adopts the intermediate, rest position between its two opposed operative positions, and which is cylindrical when the element 27 is formed by a sleeve. Moreover, the flat portion 28 is connected to the ramp-like portions 29a and 29b by small curved connecting regions.

The resilient counter member 32 connected to the terminal portion 19 has a plurality of resilient arms 34, for example, three arms, which surround the element 27 and engage it with radial pressure and with the ability to slide on the outer shaped surface by means of respective curved ends 34a. The member 32 is preferably formed in one piece from a metal sheet as a result of a bending operation so that the arms 34 are integral with a collar 36 for connection to the bush 20 of the terminal portion 19.

In particular, the collar 36 has a central axial hole 38, the peripheral rim of which is intended to be fitted in an annular groove 21 of the bush 20. To facilitate the connection of the collar 36 to the bush 20, the collar has a radial slot 40 so that it can be resiliently opened out slightly so that its rim 38 can be snap-engaged in the groove 21 and can remain therein permanently once the deforming action which brought about its temporary opening-out has ceased.

The appended drawings show, in particular, a device for stressing a gear engagement cable of a motor-vehicle transmission. In this case, the radially outer surfaces of the ramp-like or conical portions 29a, 29b are inclined so as to diverge from the flat portion 28 so that, when the ends 34a of the arms of the member 32 are disposed on these conical surfaces, they tend to move axially away from the intermediate flat portion 28. Conversely, in the case of a gear selection cable, the flat portion 28 is disposed in an intermediate position between a pair of ramp-like or conical portions 29a and 29b which have an opposite slope to that shown int the drawings, that is, both converging towards the flat portion 28.

For use on flexible control cables for motor-vehicle transmissions, a taper or inclination to the flat portion of about 6° is preferred, both for gear engagement cables and for gear selection cables. However, for different applications, this angle could adopt a different value.

In operation, the connection portion 19 undergoes a movement substantially along the axis of the cable 5, that is, along the arrow A-B of Figure 2, as a result of the operation of a control lever associated with the vehicle and of the corresponding displacement of a pin with a spherical head connected thereto and engaging the spherical seat 24, and this movement brings about a displacement of the cable 5 relative to the sheath 3, which is normally stationary.

As a result of the movement of the portion 19, the curved ends 34a of the arms 34 of the resilient member 32 slide on the outer surface of the element 27.

In particular, starting from the position shown in the drawings, in which the ends 34a are disposed on the flat, intermediate portion 28 which corresponds to the rest position of the cable 5, for example, the idle position in the case of the gear engagement cable of the transmission, a movement of the portion 19 in the direction of the arrow A of Figure 2 causes the ends 34a to move on the ramp 29b. Owing to the resilient radial pressure exerted by the ends 34a on this portion, the cable 5 is subject to a tensile stress relative to the sheath 3. In the opposite case in which the portion 19 undergoes a movement in the direction of the arrow B of Figure 2, the ends 34a move on the ramp 29a so that, by virtue of the inclination of this ramp and of the resilient radial pressure of the ends 34a, the cable 5 is subject to a compression stress relative to the sheath 3.

In each of the operative positions of the operating cable 5 relative to the sheath 3, the cable is thus subjected to a stress which allows to cancel out the play between the cable and the sheath 3, consequently preventing relative vibration.

## Claims

1. A flexible control cable, particularly for motor-vehicle transmissions, comprising an operating cable (5) which is slidable in a sheath (3) and which can adopt a rest position and at least one operative position relative to the sheath (3), a tubular portion (15) being connected to one end of the sheath (3) for the sliding of a corresponding end portion (17) of the operating cable (5),
characterized in that a stressing device is provided and comprises a shaped element (27) associated with the tubular portion (15) and a resilient counter member (32) fixed axially to the operating cable (5) for engaging the shaped element (27) with pressure and with a capability for relative sliding, the shaped element (27) including at least one ramp-like portion (29a, 29b) which can be engaged by the counter member (32) when the operating cable (5) is in its operative position, so that an axial stress is generated between the operating cable (5) and the sheath (3).

2. A cable according to Claim 1, characterized in that the shaped element (27) comprises a flat portion (28) which can be engaged by the counter member (32) when the operating cable (5) adopts the rest position.

3. A cable according to Claim 1 or Claim 2, characterized in that the tubular portion is an auxiliary tubular body (15) connected to the sheath (3).

4. A cable according to any one of Claims 1 to 3, characterized in that the at least one ramp-like portion (29a, 29b) is inclined at about 6° to the tubular portion (15).

5. A cable according to any one of Claims 2 to 4, characterized in that the operating cable (5) can adopt two operative positions on opposite sides of the rest position, and in that the shaped element (27) includes two ramp-like portions (29a, 29b) disposed on opposite sides of the flat portion (28).

6. A cable according to any one of Claims 1 to 5, characterized in that the shaped element (27) is formed by an added sleeve-like portion (27), the flat portion being constituted by a cylindrical portion (28) and the at least one ramp-like portion being constituted by a respective conical portion (29a, 29b).

7. A cable according to Claim 6, characterized in that the sleeve-like element (27) is made of plastics material moulded onto the tubular body (15).

8. A cable according to any one of Claims 1 to 7, characterized in that each ramp-like portion (29a, 29b) extends for a distance at least equal to the travel of the operating cable (5) relative to the sheath (3) between the rest position and the respective operative position.

9. A cable according to any one of Claims 1 to 8, characterized in that the resilient counter member (32) has a plurality of substantially parallel, plate-like arms (34) surrounding the shaped element (27) and extending from a portion (36) for connection to the operating cable (5), each arm (32) having an end (34a) for engaging the element (27).

10. A cable according to Claim 9, characterized in that the counter member (32) comprises three arms (34) uniformly spaced angularly around the shaped element (27).

11. A cable according to Claim 9 or Claim 10, characterized in that each engagement end (34a) has a curved shape.

12. A cable according to any one of Claims 9 to 11, characterized in that the connection portion (36) of the resilient counter member (32) has a radial slot (40) permitting snap-engagement in an annular groove (21) of a terminal (19) of the operating cable (5).

13. A cable according to any one of Claims 9 to 12, characterized in that the resilient counter member (32) is formed in a single piece from a metal sheet.

14. A cable according to any one of Claims 1 to 13, characterized in that it is a gear-engagement cable of a motor-vehicle transmission, and in that the shaped element (27) has two ramp-like portions (29a, 29b) diverging from the intermediate flat portion (28).

15. A cable according to any one of Claims 1 to 13, characterized in that it is a gear-selection cable of a motor-vehicle transmission, and in that the shaped element (28) has two ramp-like portions converging towards the flat intermediate portion (28).
